# EUROPÄISCHE PATENTSCHRIFT

(11) **EP 1 329 613 B1**
(45) Veröffentlichungstag und Bekanntmachung des Hinweises auf die Patenterteilung: **13.06.2007**
(21) Anmeldenummer: 03000038.4
(22) Anmeldetag: 07.01.2003
(51) Int. Cl.: F02B 77/13

(54) **Akustisches Abschirmelement**
Acoustic baffle
Ecran acoustique

(30) Priorität: 18.01.2002 DE 10201763
(43) Veröffentlichungstag der Anmeldung: 23.07.2003
(73) Patentinhaber: LANXESS Deutschland GmbH, 51369 Leverkusen (DE)
(72) Erfinder: Grosser, Ulrich, 51515 Kürten (DE); Knaup, Jürgen, 50829 Köln (DE)

(56) Entgegenhaltungen:
- EP-A- 0 063 715
- EP-A- 0 310 118
- DE-U- 20 002 683
- GB-A- 2 106 612
- US-A- 4 522 165
- PATENT ABSTRACTS OF JAPAN vol. 012, no. 404 (M-757), 26. Oktober 1988 (1988-10-26) & JP 63 147927 A (TOKAI RUBBER IND LTD), 20. Juni 1988 (1988-06-20)

## Beschreibung

Die Erfindung betrifft ein akustisches Abschirmelement zur Abschirmung von Schallquellen, insbesondere an Kraftfahrzeugmotoren, auf der Basis eines Kunststoff- Metallverbundbauteiles unter Verwendung eines thermoplastischen Kunststoffes. Das Abschirmelement weist im Bereich der von dem Abschirmelement abgedeckten Schallquelle ein flächiges Einlegestück aus Metall auf, das mindestens auf einer Seitenfläche des Einlegestücks mit dem Kunststoff durch Spritzguss fest verbunden ist.

Akustische Anforderungen an Maschinen, Fahrzeugen, etc. z.B. im KFZ Motorraum erfordern Schalldämmmaßnahmen. Saugrohre von z.B. KFZ-Motoren sind Schallemitter insbesondere im Bereich der Sammler. Die auftretende Schallleistung rührt einerseits von Verformungen der Außenwand (Vibrationen, Eigenresonanzen) /Körperschall und andererseits von Innengeräuschen (Schalldurchgang durch die Außenwand ) /Luftschall des Saugrohres her. Diese Geräusche gilt es zu dämpfen bzw. zu dämmen. Akustik - Cover werden z. B. bei KFZ verwendet, um die Schallemissionen des Motors und der Aggregate zu dämmen, um die Geräuschabstrahlung des KFZ positiv zu beeinflussen. Zur optimalen Lösung dieser Aufgabe benötigt man Bauteile mit folgender Charakteristik: Eigensteifheit, Dimensionsstabilität, partiell hohes Flächengewicht, Passgenauigkeit und hohe Eigendämpfung.

Bauteile dieser Art können dann als Gehäusebauteile von Geräuschemittern (z.B. Saugrohre von KFZ-Motoren) und/oder als Akustikabdeckungen (z.B. Akustikabdeckung im KFZ-Motorraum) eingesetzt werden.

Zur Zeit werden teilweise dickwandige Metallbauteile z.B. Saugrohre eingesetzt. Auf Kunststoffbauteile werden z.T. geschlossene Schäume als Dämpfer aufgebracht. Kunststoffteile werden zur Erhöhung der Eigensteifigkeit verrippt. Es werden Zusätzliche Abdeckungen evtl. mit zusätzlicher Dämmschicht (z.B. Integralschaum oder Dämmmatten auf Bitumenbasis) installiert. Es werden sog. Dämmmatten aufgeklebt, um das spezifische Flächengewicht der Bauteilwand zu erhöhen.

Weiter werden sogenannte "Kissing Points" z. B. an Saugrohren vorgesehen, um schwingende Wände auszusteifen. indem man Sie gegeneinander abstützt. Nachteile dieser Technik sind Störungen im Innenvolumen, eine Verringerung des Strömungsquerschnitts und ein erhöhter Bauraum. Es werden gewöhnlich die Wanddicken vergrößert, um das Flächengewicht und die Steifigkeit zu erhöhen. Der Nachteil dieses Vorgehens ist aufwendiger und teuerer Materialeinsatz an Kunststoff. Diese Technik ist zudem uneffektiv durch den vergleichsweise geringen E-Modul von Kunststoff. Es werden teilweise Rippen auf der Bauteilwand angebracht mit den oben beschriebenen Nachteilen.

Aufgabe der Erfindung ist es ein akustisches Abschirmelement zur Abschirmung von Schallquellen, insbesondere an Kraftfahrzeugmotoren, bereitzustellen, das die Nachteile der bekannten Konstruktionen vermeidet und eine vergleichbar gute Abschirmung aufweist.

Die Aufgabe wird erfindungsgemäß dadurch gelöst, dass in einem Abschirmelement der eingangs genannten Art ein flächiges Einlegestück aus Metall vorgesehen wird, das mindestens auf einer Seitenfläche des Einlegestücks mit thermoplastischem Kunststoff durch Spritzguss fest verbunden ist.

Gegenstand der Erfindung ist ein akustisches Abschirmelement zur Abschirmung von Schallquellen, insbesondere an Kraftfahrzeugmotoren, auf der Basis eines Kunststoff- Metallverbundbauteiles unter Verwendung eines thermoplastischen Kunststoffes, dadurch gekennzeichnet, dass im Bereich der von dem Abschirmelement abgedeckten Schallquelle ein flächiges Einlegestück aus Metall vorgesehen ist, das mindestens auf einer Seitenfläche des Einlegestücks mit dem Kunststoff durch Spritzguss fest verbunden ist.

Das Abschirmelement ist insbesondere als gasdurchströmte Rohrleitung, insbesondere bevorzugt als Luftansaugrohr für Verbrennungsmotoren von Kraftfahrzeugen ausgebildet.

Das Abschirmelement ist alternativ bevorzugt als Luftfiltergehäuse für Verbrennungsmotoren von Kraftfahrzeugen ausgebildet.

Ebenso bevorzugt ist das Abschirmelement als Motorabdeckung für Verbrennungsmotoren von Kraftfahrzeugen ausgebildet.

Das Abschirmelement weist eine besondere Stabilität in einer bevorzugten Bauform auf, wenn das Einlegestück ein Metallblech ist, das zusätzliche Verankerungsstellen in Form von Noppen, Vertiefungen, Ausnehmungen oder Durchbrüchen aufweist, die mit dem thermoplastischen Kunststoff verbunden oder von diesem durchdrungen sind.

In einer bevorzugten Variante des Abschirmelementes ist das Einlegestück ein Drahtgeflecht, das insbesondere ganzstückig von dem thermoplastischen Kunststoff umspritzt ist.

Ein Metalleinlegeteil wird gezielt an den notwendigen Stellen in die Struktur des Verbundbauteiles ein- oder angespritzt. Dadurch werden die folgende Eigenschaften des Bauteiles erzielt:

Ein hohes Flächengewicht resultiert durch hohe Dichte des verwendeten Metalls, wodurch der Luftschall gedämmt wird. Der Schalldurchgang durch die Bauteilwand wird stark minimiert.

Eine hohe Bauteilsteifigkeit wird durch den Verbund zwischen Metall und Kunststoff erzielt und minimiert dadurch die Körperschallverstärkung (durch z.B. Eigenresonanzen ) des Bauteiles.

Die hohe Dämpfungseigenschaft des Kunststoffanteiles in der Bauteilwand führt zu guter Dämpfung von Körperschall und Luftschall. Ein großes Flächengewicht und eine hohe Bauteilsteifigkeit durch den Metallanteil in der Bauteilwand dämmen den Luftschall und minimieren die Körperschallverstärkung. Das beispielsweise aus Kunststoff hergestellte Bauteil, z.B. eine Akustikabdeckung eines KFZ Motors, wird durch ein vorgeformtes Blech verstärkt, indem das Blech homogen mit der Kunststoffwand verbunden wird. Vorzugsweise erfolgt die Verbindung durch Umspritztechnik oder entsprechend der aus der Offenlegungsschrift EP 370 342 A1 grundsätzlich bekannten Kunststoff-/Metall-Hybridtechnik- d.h. Anbinden des Einlegestücks durch Einspritzen in Knüpfpunkte (Verankerungsstellen) die in das Blech eingebracht sind.

Ebenfalls möglich: Verbindung durch Schrauben, klipsen, nieten, bördeln, kleben, oder andersartigem Form- oder Kraftschluss (in der Regel jedoch teurer als erstgenannte Variante). Bei mehrwandigen Bauteilen wie z.B. Saugrohren oder Luftfilterkästen wird die beschriebene Technik vorzugsweise an der äußeren und/oder oberen Wand angewendet.

Geeignete Kunststoffe für die Erfindung sind alle thermoplastischen Kunststoffe oder Kunststoffmischungen, insbesondere PA, bevorzugt PA 6, PA 6.6, PA 4.6, oder Polyalkylene bevorzugt PP, Polyester, insbesondere PET, PBT, PC, ABS oder auch PC-ABS Mischungen.

Besonders geeignete Metalle für das Einlegestück sind Stahl, Blei, Aluminium, Messing oder Kupfer.

Die Erfindung wird nachfolgend anhand der Figuren durch die Beispiele, welche jedoch keine Beschränkung der Erfindung darstellen, näher erläutert.

Es zeigen:
- Fig. 1: ein Ansaugrohr mit Metallblechverstärkung auf einem Luftsammler
- Fig.2: einen Ausschnitt aus einem Luftsammler mit aufgesetztem Blech
- Fig.3: das Diagramm einer Berechnung der emittierten Schalleistung für verschiedene Konstruktionen

### Beispiel

### Anwendungsbeispiel

Das Ansaugrohr eines 4-Zyl. Ottomotors ist aus Polyamid gefertigt und wird gemäß dem Stand der Technik durch das Auflegen eines ca. 15mm dicken Integralschaumes (Polyurethan) und mit einer zusätzlichen ca. 3mm dicken Akustikhaube ausgerüstet, um den akustischen Anforderungen hinsichtlich Schalldämmung zu genügen.

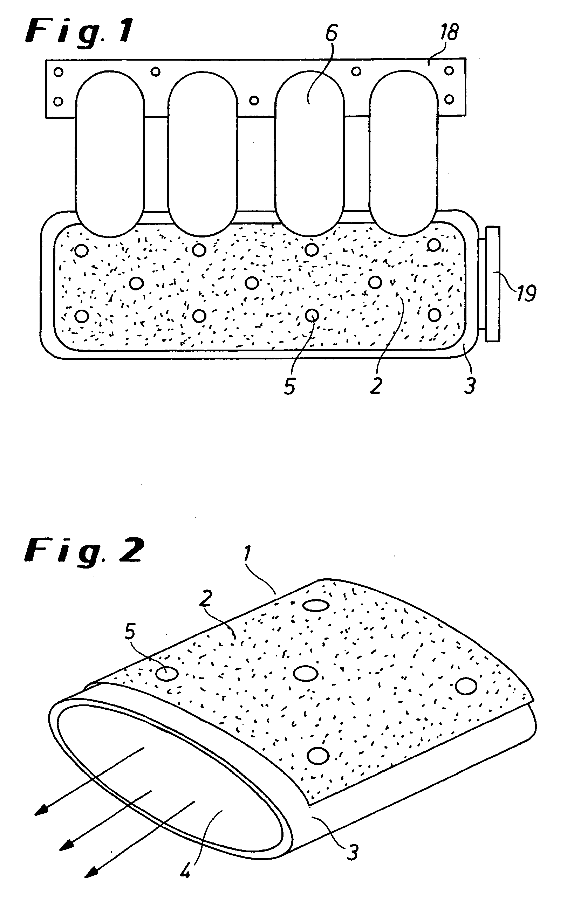

Als Alternative wurde die obere Schale des Luftsammlers 6 in der hier beschriebenen Metall-/Kunststoff-Hybridbauweise ausgelegt (siehe Figuren 1 und 2). Dabei wurde ein 1,5 mm dickes Stahlblech 2 durch durchspritzte Knüpfpunkte in Form von gesenkten Bohrungen 5 bei der Herstellung im Spritzgießwerkzeug fest mit dem Luftsammler 6 aus glasfaserverstärktem Polyamid verbunden. Hierdurch wird ein partiell höheres Flächengewicht der Bauteilwand und eine höhere Steifigkeit der Bauteilwand erreicht. (Eine Schallquelle 4 besteht hier im gasdurchströmten Innenraum). Das Stahlblech 2 bildet zusammen mit der Kunststoffwand 3 des Bauteiles 6 das akustische Abschirmelement 1 gegenüber der Schallquelle 4. Eine weitere Schallquelle ist der in den Figuren nicht gezeigte Motorblock, der mit dem Ausgangsrohr über den Zylinderkopfflansch 18 verbunden wird. Der Drosselklappenflansch 19 wird mit der Drosselklappe (nicht gezeichnet) verbunden.

Die von dem Bauteil 6, das gemäß der Erfindung aufgebaut ist, abgegebene kumulierte Schallabstrahlung, welche aus Körperschall und Luftschallquelle resultiert, wurde im Vergleich zu der Anordnung nach verschiedenen alternativen Varianten gemäß dem Stand der Technik berechnet wie nachfolgend beschrieben. Das Design (1) eines Luftsammlers 6 weist im Bereich der Schallquelle 4,5 mm Wanddicke auf und ist unverrippt. Das Design (2) weist im Bereich der Schallquelle 4 eine Wanddicke von 4,5 mm auf und ist zusätzlich mit Rippen aus Kunststoff versehen. Das Design (3) weist im Bereich der Schallquelle 4 eine Wanddicke von 6 mm auf und ist unverrippt. Alle Teile (1), (2), (3) sind aus Polyamid gefertigt.

Der als Hybrid Design bezeichnete Aufbau des Luftsammlers 6 weist 4 mm Wanddicke auf und zusätzlich ein eingelegtes Metallblech 2 entsprechend Figuren 1 und 2.

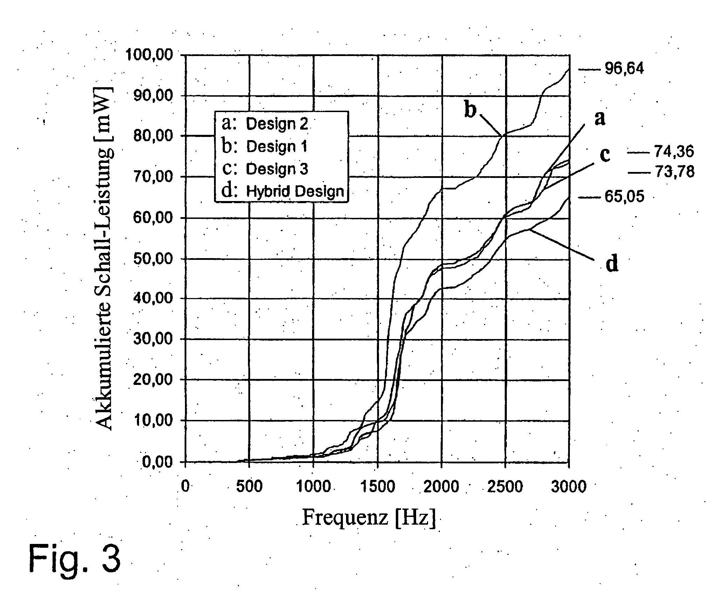

Figur 3 zeigt die bei der Berechnung erzielten Ergebnisse. Die Berechnungen wurde mit Hilfe des Rechenprogramms Abaqus durchgeführt um die einzelnen Designs zu optimieren. Die Berechnung zeigt als Ergebnis die Abhängigkeit mit der Schallleistung von der Schallfrequenz. In Figur 3 sind die Kurven der Berechnungen wiedergegeben. Messungen, die später durchgeführt wurden, bestätigten die Berechnungsergebnisse an Prototypen der Designs.

Die Berechnung macht die Höhe der Schallenergie deutlich, die Körperschall und Luftschall bei den verschiedenen Designs erzeugen. Die akkumulierte abgegebene Schallleistung ist insbesondere im höheren Frequenzbereich für die Ausführung gemäß der Erfindung am geringsten. Die Wirksamkeit damit nachgewiesen. Nur durch eine signifikante Erhöhung der Wandstärke kann ein ähnlicher Effekt erzielt werden, der jedoch qualitativ schlechter ausfällt.

## Patentansprüche

1. Akustisches Abschirmelement zur Abschirmung von Schallquellen, insbesondere an Kraftfahrzeugmotoren, auf der Basis eines Kunststoff- Metallverbundbauteiles unter Verwendung eines thermoplastischen Kunststoffes, **dadurch gekennzeichnet, dass** im Bereich der von dem Abschirmelement (1) abgedeckten Schallquelle (4) ein flächiges Einlegestück (2) aus Metall vorgesehen ist, das mindestens auf einer Seitenfläche des Einlegestücks (2) mit dem Kunststoff (3) durch Spritzguss fest verbunden ist.

2. Abschirmelement nach Anspruch 1, **dadurch gekennzeichnet, dass** das Abschirmelement (1) als gasdurchströmte Rohrleitung, insbesondere als Luftansaugrohr für Verbrennungsmotoren von Kraftfahrzeugen ausgebildet ist.

3. Abschirmelement nach Anspruch 1, **dadurch gekennzeichnet, dass** das Abschirmelement als Luftfiltergehäuse für Verbrennungsmotoren von Kraftfahrzeugen ausgebildet ist.

4. Abschirmelement nach Anspruch 1, **dadurch gekennzeichnet, dass** das Abschirmelement als Motorabdeckung für Verbrennungsmotoren von Kraftfahrzeugen ausgebildet ist.

5. Abschirmelement nach einem der Ansprüche 1 bis 4, **dadurch gekennzeichnet, dass** das Einlegestück (2) ein Metallblech ist, das zusätzliche Verankerungsstellen (5) in Form von Noppen, Vertiefungen, Ausnehmungen oder Durchbrüchen aufweist, die mit dem thermoplastischen Kunststoff (3) verbunden oder von diesem durchdrungen sind.

6. Abschirmelement nach einem der Ansprüche 1 bis 5, **dadurch gekennzeichnet, dass** das Einlegestück (2) ein Drahtgeflecht ist, das insbesondere ganzstückig von dem thermoplastischen Kunststoff (3) umspritzt ist.

## Claims

1. Acoustic shielding element for shielding sound sources, in particular on motor vehicle engines, which is based on a plastic-metal composite component utilizing a thermoplastic material, **characterized in that** a sheetlike inlay piece (2) of metal is provided in the region of the sound source (4) covered by the shielding element (1), at least a side surface of the inlay piece (2) being thermally connected to the plastic (3) by injection moulding.

2. Shielding element according to Claim 1, **characterized in that** the shielding element (1) is configured as a gas-ducting tube, in particular as an air intake manifold for combustion engines of motor vehicles.

3. Shielding element according to Claim 1, **characterized in that** the shielding element is configured as an air filter casing for combustion engines of motor vehicles.

4. Shielding element according to Claim 1, **characterized in that** the shielding element is configured as an engine cowling for combustion engines of motor vehicles.

5. Shielding element according to any one of the Claims 1 to 4, **characterized in that** the inlay piece (2) is a piece of metal having additional attachment sites (5) in the form of knubs, indentations, recesses or perforations that are connected to or penetrated by the thermoplastic material (3).

6. Shielding element according to any one of the Claims 1 to 5, **characterized in that** the inlay piece (2) is a wire braid which is in particular wholly surrounded by the thermoplastic material (3).

## Revendications

1. Ecran acoustique pour isoler des sources sonores, en particulier dans des moteurs de véhicules automobiles, à base d'une pièce composite plastique-métal avec utilisation d'un plastique thermoplastique, **caractérisé en ce qu'**il est prévu dans la région de la source sonore (4) recouverte par l'écran (1) une pièce d'insertion plate (2) en métal, qui est assemblée fermement au plastique (3) par projection sur au moins une face latérale de la pièce d'insertion (2).

2. Ecran selon la revendication 1, **caractérisé en ce que** l'écran (1) est formé par une conduite tubulaire parcourue par un gaz, en particulier par un tube d'aspiration d'air pour des moteurs à combustion interne de véhicules automobiles.

3. Ecran selon la revendication 1, **caractérisé en ce que** l'écran est formé par un boîtier de filtre à air pour des moteurs à combustion interne de véhicules automobiles.

4. Ecran selon la revendication 1, **caractérisé en ce que** l'écran est formé par un recouvrement de moteur pour des moteurs à combustion interne de véhicules automobiles.

5. Ecran selon l'une quelconque des revendications 1 à 4, **caractérisé en ce que** la pièce d'insertion (2) est une tôle métallique, qui présente des points d'ancrage supplémentaires (5) en forme de bosses, de creux, d'évidements ou de percées, qui sont assemblés au plastique thermoplastique (3) ou qui sont traversés par celui-ci.

6. Ecran selon l'une quelconque des revendications 1 à 5, **caractérisé en ce que** la pièce d'insertion (2) est un treillis de fil, qui est enrobé, en particulier entièrement, par le plastique thermoplastique (3).
